# FASCICULE DE BREVET EUROPEEN

(11) **EP 4 516 680 B1**
(45) Date de publication et mention de la délivrance du brevet: **12.08.2026**
(21) Numéro de dépôt: 24196046.7
(22) Date de dépôt: 23.08.2024
(51) Int. Cl.: B64D 33/02, B64D 13/00

(54) **AÉRONEF COMPRENANT AU MOINS UNE CAVITÉ DÉBOUCHANT AU NIVEAU D'UNE PAROI AÉRODYNAMIQUE ET POURVUE D'UNE RÉDUCTION DE SECTION DE PASSAGE PARTIELLE**
FLUGZEUG MIT MINDESTENS EINEM HOHLRAUM, DER AN EINER AERODYNAMISCHEN WAND EINE TEILREDUZIERUNG DES DURCHGANGSQUERSCHNITTS AUFWEIST
AIRCRAFT COMPRISING AT LEAST ONE CAVITY OPENING AT AN AERODYNAMIC WALL AND PROVIDED WITH A PARTIAL PASSAGE SECTION REDUCTION

(30) Priorité: 28.08.2023 FR 2309021
(43) Date de publication de la demande: 05.03.2025
(73) Titulaire: AIRBUS OPERATIONS (S.A.S.), 31060 Toulouse (FR)
(72) Inventeur: FARGIER, Thierry, 31060 TOULOUSE (FR); JUANAS FERNANDEZ, Maria Del Sagrario, 31060 TOULOUSE (FR); NODE-LANGLOIS, Thomas, 31060 TOULOUSE (FR); GALDEANO, Stéphane, 31060 TOULOUSE (FR); ROMEO, Jean-Paul, 31060 TOULOUSE (FR)
(74) Mandataire: Fantin, Laurent

(56) Documents cités:
- EP-B1- 0 926 064
- EP-B1- 1 251 069
- EP-B1- 1 828 571
- EP-B1- 2 464 568

## Description

La présente demande se rapporte à un aéronef comprenant au moins une cavité débouchant au niveau d'une paroi aérodynamique et pourvue d'une réduction de section de passage partielle.

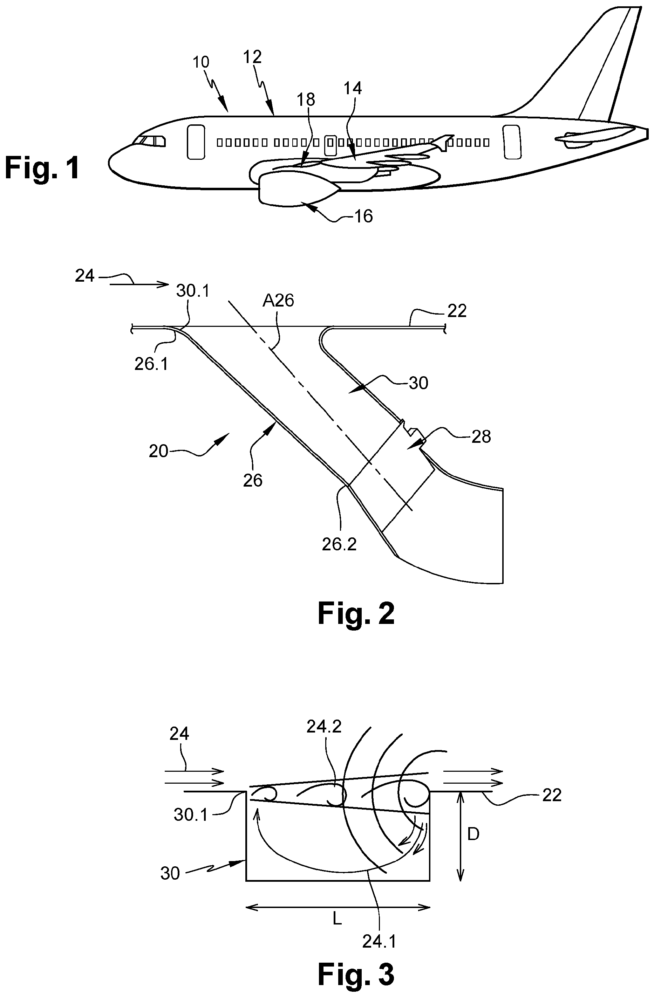

Une réalisation de l'art antérieur est montré dans les figures 2 et 3.

Selon un mode de réalisation, un aéronef 10 comprend un fuselage 12, des ailes 14 prévues de part et d'autre du fuselage 12 ainsi que des ensembles de propulsion 16 reliés aux ailes par des mâts 18. L'aéronef 10 comprend au moins un dispositif d'admission d'air 20, visible sur la figure 2, qui débouche au niveau d'une paroi aérodynamique 22 en contact avec un flux d'air 24 lorsque l'aéronef 10 est en vol. Ce dispositif d'admission d'air 20 est configuré pour capter une partie du flux d'air 24 et l'acheminer en direction d'un équipement de l'aéronef. La paroi aérodynamique 22 peut être prévue au niveau du fuselage 12, d'une aile 14, d'un ensemble de propulsion 16 ou d'un mât 18.

Selon une configuration, le dispositif d'admission d'air 20 comprend un conduit d'admission 26, qui s'étend entre une première extrémité 26.1 reliée à la paroi aérodynamique 22 et une deuxième extrémité 26.2, ainsi qu'une vanne 28 reliée à la deuxième extrémité 26.2 du conduit d'admission 26 et configurée pour occuper un état passant dans lequel la vanne 28 permet à un flux d'air canalisé par le conduit d'admission 26 de la traverser et un état fermé dans lequel la vanne 28 bloque le flux d'air dans le conduit d'admission 26.

Selon une configuration, la première extrémité 26.1, qui débouche au niveau de la paroi aérodynamique 22, est évasée et forme une entrée d'air de type affleurant. Selon cette configuration, la première extrémité 26.1 du conduit d'admission 26 est positionnée sur une surface de référence sensiblement parallèle au flux d'air 24, ladite surface de référence étant, en dehors du conduit d'admission 26, confondue avec la face extérieure de la paroi aérodynamique 22 en contact avec le flux d'air 24.

Le dispositif d'admission d'air 20 est optimisé pour réduire la traînée de l'aéronef lorsque la vanne 28 est à l'état ouvert.

Lorsque la vanne 28 est à l'état fermé, le conduit d'admission 26 et la vanne 28 à l'état fermé forment une cavité 30, représentée de manière schématique sur la figure 3, qui débouche au niveau de la paroi aérodynamique 22. Le flux d'air 24 qui s'écoule au-dessus de la cavité 30 génère un bruit d'origine aérodynamique, notamment un sifflement, en raison du couplage entre un flux d'air de retour 24.1 formé dans la cavité 30 et un flux perturbé 24.2 apparaissant après le bord amont 30.1 de la cavité 30.

Le document EP1828571 décrit une entrée d'air de ventilation qui présente une zone déformable pour ajuster la section de passage de l'entrée d'air. Cette zone s'étend sur une partie réduite de la circonférence de l'entrée d'air.

Le document EP1251069 décrit une double entrée d'air qui comprend deux canaux d'entrée, l'un d'eux étant pourvu d'un volet pour l'obturer.

Le document EP0926064B1 décrit un dispositif de contrôle d'écoulement permettant d'éliminer la résonance de cavité induite par l'écoulement dans un passage d'écoulement fermé ou quasi fermé comportant une ouverture d'entrée définie entre un bord d'entrée amont et un bord d'entrée aval et un fond fermé par une valve papillon. Le passage reçoit l'écoulement du fluide extérieur par l'ouverture. Le dispositif de contrôle d'écoulement comprend une ailette d'entrée fixe dotée d'un bord d'attaque, d'un bord de fuite et de plusieurs éléments de support assurant sa liaison à l'entrée. L'ailette est positionnée de sorte que son bord d'attaque intercepte la couche de cisaillement de l'écoulement du fluide extérieur et que son bord de fuite s'étende dans le passage au niveau de l'entrée. La résonance de cavité induite par l'écoulement est réduite ou éliminée dans le passage d'extrémité fermé ou presque fermé grâce à l'interception de la couche de cisaillement libre passant au-dessus de l'ouverture d'entrée par le dispositif de contrôle d'écoulement.

La présente invention vise à remédier à tout ou partie des inconvénients de l'art antérieur. A cet effet, l'invention a pour objet un aéronef selon la revendication 1.

Selon l'invention, la cavité comprend au moins une réduction de section de passage, distante du fond, qui s'étend seulement sur une partie de la circonférence de la paroi latérale tubulaire. Le fait que la réduction de section de passage soit distante du fond et partielle (non continue sur toute la circonférence de la paroi latérale tubulaire) permet d'obtenir une réduction du bruit d'origine aérodynamique.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe longitudinale d'un dispositif d'admission d'air illustrant un mode de réalisation de l'art antérieur,
- La figure 3 est une représentation schématique du dispositif d'admission d'air, visible sur la figure 2, formant une cavité ainsi que des flux d'air circulant au-dessus et dans ladite cavité,
- La figure 4 est une vue latérale d'un dispositif d'admission d'air formant une cavité illustrant un mode de réalisation de l'invention,
- La figure 5 est une vue latérale d'un conduit d'admission illustrant un mode de réalisation de l'invention, une partie du conduit d'admission n'étant pas représentée pour visualiser l'intérieur dudit conduit d'admission,
- La figure 6 est une coupe transversale d'une cavité pourvue d'une réduction de section de passage illustrant un mode de réalisation de l'invention,
- La figure 7 est une coupe selon la ligne VII-VII de la figure 6 de la cavité pourvue d'une réduction de section de passage illustrant un mode de réalisation de l'invention.

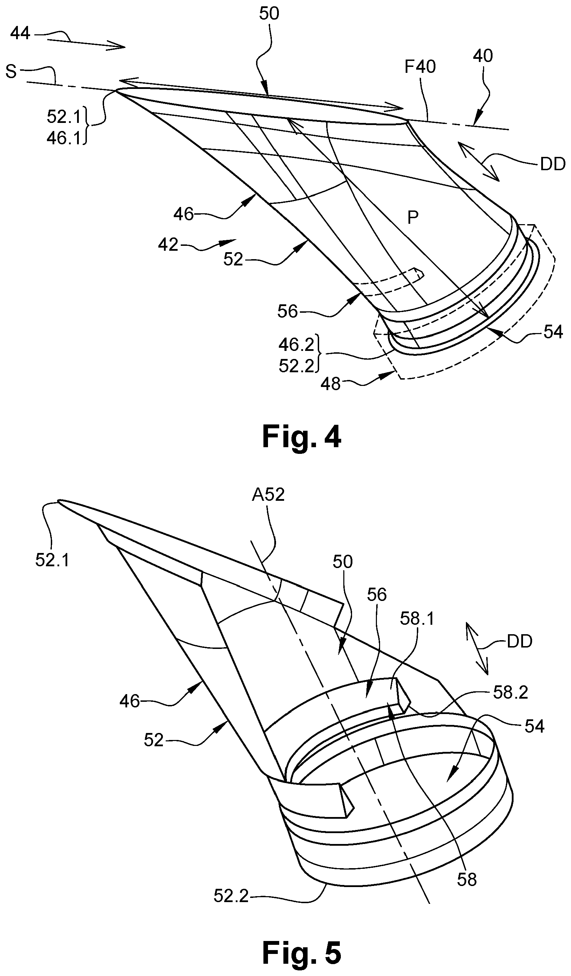

Selon un mode de réalisation sur la figure 4, un aéronef comprend au moins une paroi aérodynamique 40 ainsi qu'au moins un dispositif d'admission d'air 42.

La paroi aérodynamique 40 présente une face extérieure F40 contre laquelle s'écoule un flux d'air 44 selon une direction d'écoulement lorsque l'aéronef est en vol. La paroi aérodynamique peut être prévue au niveau du fuselage, d'une aile, d'un ensemble de propulsion ou d'un mât de l'aéronef.

Le dispositif d'admission d'air 42 comprend un conduit d'admission 46, qui s'étend entre une première extrémité 46.1 reliée à la paroi aérodynamique 40 et une deuxième extrémité 46.2, ainsi qu'une vanne 48 reliée à la deuxième extrémité 46.2 du conduit d'admission 46 et configurée pour occuper un état passant dans lequel la vanne 48 permet à un flux d'air canalisé par le conduit d'admission 46 de la traverser et un état fermé dans lequel la vanne 48 bloque le flux d'air dans le conduit d'admission 46.

Selon une configuration, la première extrémité 46.1 débouche au niveau de la paroi aérodynamique 40 et présente une forme qui s'évase en direction de la face extérieure F40 de la paroi aérodynamique 40. Ainsi, la première extrémité 46.1 du conduit d'admission 46 forme une entrée d'air de type affleurant. Selon cette configuration, la première extrémité 46.1 du conduit d'admission 46 est positionnée sur une surface de référence S sensiblement parallèle au flux d'air 44, ladite surface de référence S étant, en dehors du conduit d'admission 46, confondue avec la face extérieure F40 de la paroi aérodynamique 40 en contact avec le flux d'air 44. La surface de référence S et la face extérieure F40 peuvent être indifféremment planes ou courbes.

Lorsque la vanne 48 est à l'état fermé, le conduit d'admission 46 et la vanne 48 à l'état fermé forment une cavité 50 qui débouche au niveau de la paroi aérodynamique 40.

Cette cavité 50 est délimitée par une paroi latérale tubulaire 52 (correspondant au conduit d'admission 46), qui s'étend entre des première et deuxième extrémités 52.1, 52.2, ainsi que par un fond 54 (correspondant à la vanne 48 et plus particulièrement au clapet de la vanne) distant de la paroi aérodynamique 40 et situé au niveau de la deuxième extrémité 52.2 de la paroi latérale tubulaire 52, la première extrémité 52.1 de la paroi latérale tubulaire 52 (correspondant la première extrémité 46.1 du conduit d'admission 46) étant située au niveau de la face extérieure F40 de la paroi aérodynamique 40. La paroi latérale tubulaire 52 est sensiblement parallèle à une direction de référence DD qui peut être perpendiculaire ou inclinée par rapport à la surface de référence S. A titre indicatif, la direction de référence DD forme un angle d'environ 60° avec la surface de référence S.

La paroi latérale tubulaire 52 est cylindrique et présente un axe de révolution A52 parallèle à la direction de référence.

Selon un agencement, le fond 54 est sensiblement perpendiculaire à la direction de référence DD.

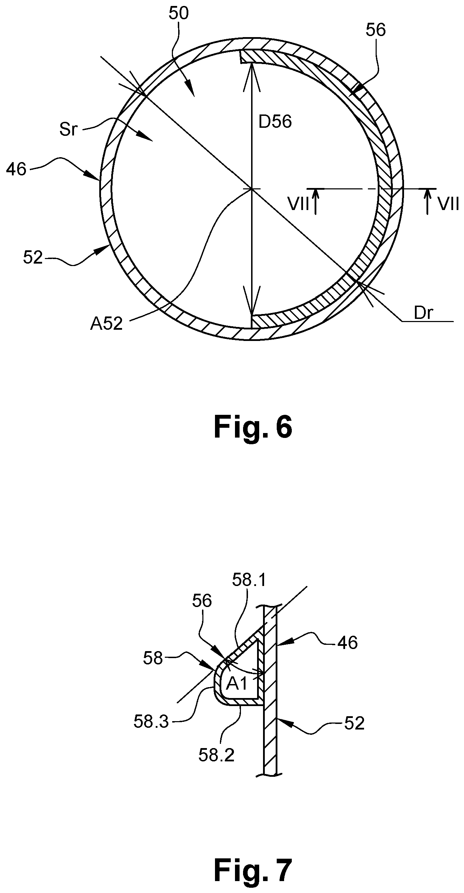

La cavité 50 présente une section de passage de référence Sr correspondant à la section de la paroi latérale tubulaire 52. Cette dernière étant cylindrique, la section de passage de référence Sr se caractérise par un diamètre Dr, comme illustré sur la figure 6.

La cavité 50 présente une profondeur P correspondant à la distance moyenne entre la surface de référence S et le fond 54. La paroi latérale tubulaire 52 étant cylindrique, la profondeur P correspond à une distance séparant un premier point d'intersection entre l'axe de révolution A52 et la surface de référence S ainsi qu'un deuxième point d'intersection entre l'axe de révolution A52 et le fond 54.

Selon une particularité de l'invention, la cavité 50 comprend au moins une réduction de section de passage 56 distante du fond 54 et partielle. Par partielle, on entend que la réduction de section de passage 56 ne s'étend que sur une partie de la circonférence de la paroi latérale tubulaire 52 et non sur toute la circonférence.

Selon une configuration, la réduction de section de passage 56 est positionnée dans un plan transversal perpendiculaire à la direction de référence DD. Ce plan transversal est situé à une distance du fond 54 de l'ordre de 30% de la profondeur P avec un intervalle de tolérance de +/- 20% et de préférence de +/- 5%.

Selon une configuration, la réduction de section de passage 56 présente une section de passage de l'ordre de 80% de la section de passage de référence Sr avec un intervalle de tolérance de l'ordre de +/- 10%, de préférence de +/- 5%. La paroi latérale tubulaire 52 étant cylindrique et présentant un diamètre de référence Dr, la réduction de section de passage 56 présente un diamètre D56 de l'ordre de 80% du diamètre de référence Dr avec un intervalle de tolérance de l'ordre de +/- 10%, de préférence de +/- 5%.

Selon un agencement, la réduction de section de passage 56 s'étend sur la moitié de la circonférence de la paroi latérale tubulaire 52 avec un intervalle de tolérance de +/- 20% et de préférence de +/- 5%.

Selon un agencement, lorsque la paroi latérale tubulaire 52 est inclinée, la réduction de section passage 56 est positionnée dans un demi-espace amont délimité par un plan médian, passant par l'axe de révolution A52, perpendiculaire à la direction d'écoulement du flux d'air 44. Le terme amont fait référence au sens d'écoulement du flux d'air 44, qui s'écoule de l'amont vers l'aval.

Selon un mode de réalisation, la réduction de section de passage 56 comprend une nervure 58, en saillie par rapport à la paroi latérale tubulaire 52, comportant un premier chant 58.1 qui s'étend à partir de la paroi latérale tubulaire 52, orienté vers la première extrémité 52.1 de la paroi latérale tubulaire 52, ainsi qu'un deuxième chant 58.1 qui s'étend à partir de la paroi latérale tubulaire 52, orienté vers le fond 54.

Selon une configuration, le premier chant 58.1 forme un angle A1 avec la paroi latérale tubulaire 52 compris entre 20 et 60°, de préférence compris entre 30 et 40°.

Selon un agencement, le deuxième chant 58.2 est sensiblement perpendiculaire à la paroi latérale tubulaire 52.

Selon un mode de réalisation, la nervure 58 présente une zone intermédiaire 58.3 intercalée entre les premier et deuxième chants 58.1, 58.2 et les reliant. Selon une configuration, cette zone intermédiaire 58.3 peut être courbe.

Selon un mode de réalisation visible sur la figure 7, la nervure 58 est un boudin creux rapporté contre la paroi latérale tubulaire 52. A titre indicatif, la nervure 58 est en matière plastique et fixée contre la paroi latérale tubulaire 52 par collage ou tout autre moyen.

La nervure 58 pourrait être pleine. Le fait que le boudin soit creux permet de réduire la masse.

Le fait que la réduction de section de passage 56 soit distante du fond 54 et partielle (non continue sur toute la circonférence de la paroi latérale tubulaire 52) permet d'obtenir une réduction du bruit d'origine aérodynamique.

## Revendications

1. Aéronef comprenant au moins une paroi aérodynamique (40) contre laquelle s'écoule un flux d'air (44) selon une direction d'écoulement lorsque l'aéronef est en vol et un dispositif d'admission d'air (42) qui comporte :
- un conduit d'admission (46), qui s'étend entre une première extrémité (46.1) reliée à la paroi aérodynamique (40) et une deuxième extrémité (46.2),
- une vanne (48) reliée à la deuxième extrémité (46.2) du conduit d'admission (46) et configurée pour occuper un état passant dans lequel la vanne (48) permet à un flux d'air canalisé par le conduit d'admission (46) de la traverser et un état fermé dans lequel la vanne (48) bloque le flux d'air dans le conduit d'admission (46), le conduit d'admission (46) et la vanne (48) à l'état fermé délimitant une cavité (50) qui débouche au niveau de la paroi aérodynamique (40),
ladite cavité (50) étant délimitée par une paroi latérale tubulaire (52) qui s'étend entre des première et deuxième extrémités (52.1, 52.2) ainsi que par un fond (54) distant de la paroi aérodynamique (40) et situé au niveau de la deuxième extrémité (52.2) de la paroi latérale tubulaire (52), la première extrémité (52.1) de la paroi latérale tubulaire (52) étant située au niveau de la paroi aérodynamique (40) sur une surface de référence (S) sensiblement parallèle au flux d'air (44), la cavité (50) présentant une section de passage de référence (Sr) et une profondeur (P), la paroi latérale tubulaire (52) étant cylindrique, comportant un axe de révolution (A52) parallèle à une direction de référence (DD) et présentant une circonférence, la profondeur (P) correspondant à une distance séparant un premier point d'intersection entre l'axe de révolution (A52) et la surface de référence (S) ainsi qu'un deuxième point d'intersection entre l'axe de révolution (A52) et le fond (54) ;
la cavité (50) comprenant au moins une réduction de section de passage (56), distante du fond (54), qui s'étend seulement sur une partie de la circonférence de la paroi latérale tubulaire (52),
la paroi latérale tubulaire (54) présentant un diamètre de référence (Dr) et
la réduction de section de passage (56) présentant un diamètre (D56) de l'ordre de 80% du diamètre de référence (Dr) avec un intervalle de tolérance de l'ordre de +/- 10%, de préférence de +/- 5%.

2. Aéronef selon la revendication précédente, dans lequel la réduction de section de passage (56) s'étend sur la moitié de la circonférence de la paroi latérale tubulaire (52) avec un intervalle de tolérance de +/- 20%, de préférence de +/- 5%.

3. Aéronef selon la revendication précédente, dans lequel la réduction de section passage (56) est positionnée dans un demi-espace amont délimité par un plan médian passant par l'axe de révolution (A52), perpendiculaire à la direction d'écoulement du flux d'air (44), le terme amont faisant référence au sens d'écoulement du flux d'air (44), qui s'écoule de l'amont vers l'aval.

4. Aéronef selon l'une des revendications précédentes, dans lequel la réduction de section de passage (56) est positionnée dans un plan transversal perpendiculaire à la direction de référence (DD).

5. Aéronef selon la revendication précédente, dans lequel le plan transversal est situé à une distance du fond (54) de l'ordre de 30% de la profondeur (P) de la cavité (50) avec un intervalle de tolérance de +/- 20%, de préférence de +/- 5%.

6. Aéronef selon l'une des revendications précédentes, dans lequel la réduction de section de passage (56) présente une section de passage de l'ordre de 80% de la section de passage de référence (Sr) avec un intervalle de tolérance de l'ordre de +/- 10%, de préférence de +/- 5%.

7. Aéronef selon l'une des revendications précédentes, dans lequel la réduction de section de passage (56) comprend une nervure (58), en saillie par rapport à la paroi latérale tubulaire (52), comportant un premier chant (58.1) qui s'étend à partir de la paroi latérale tubulaire (52), orienté vers la première extrémité (52.1) de la paroi latérale tubulaire (52), ainsi qu'un deuxième chant (58.1) qui s'étend à partir de la paroi latérale tubulaire (52), orienté vers le fond (54).

8. Aéronef selon la revendication précédente, dans lequel le premier chant (58.1) forme un angle avec la paroi latérale tubulaire (52) compris entre 20 et 60°, de préférence compris entre 30 et 40°.

9. Aéronef selon l'une des revendications 7 à 8, dans lequel le deuxième chant (58.2) est sensiblement perpendiculaire à la paroi latérale tubulaire (52).

10. Aéronef selon l'une des revendications 7 à 9, dans lequel la nervure (58) est un boudin creux rapporté contre la paroi latérale tubulaire (52).

## Patentansprüche

1. Luftfahrzeug mit wenigstens einer aerodynamischen Wand (40), an der im Flug ein Luftstrom (44) in einer Strömungsrichtung vorbeiströmt, und einer Lufteinlassvorrichtung (42), die aufweist:
- einen Einlasskanal (46), der sich zwischen einem ersten Ende (46.1), das mit der aerodynamischen Wand (40) verbunden ist, und einem zweiten Ende (46.2) erstreckt,
- ein Ventil (48), das mit dem zweiten Ende (46.2) des Einlasskanals (46) verbunden und dazu eingerichtet ist, einen Durchlasszustand einzunehmen, in dem das Ventil (48) einen durch den Einlasskanal (46) geleiteten Luftstrom durch sich hindurchströmen lässt, sowie einen geschlossenen Zustand, in dem das Ventil (48) den Luftstrom im Einlasskanal (46) blockiert, wobei der Einlasskanal (46) und das Ventil (48) im geschlossenen Zustand einen Hohlraum (50) begrenzen, der im Bereich der aerodynamischen Wand (40) mündet,
wobei der Hohlraum (50) von einer rohrförmigen Seitenwand (52), die sich zwischen einem ersten und einem zweiten Ende (52.1, 52.2) erstreckt, sowie von einem Boden (54) begrenzt wird, der von der aerodynamischen Wand (40) beabstandet ist und sich im Bereich des zweiten Endes (52.2) der rohrförmigen Seitenwand (52) befindet, wobei das erste Ende (52.1) der rohrförmigen Seitenwand (52) im Bereich der aerodynamischen Wand (40) auf einer Bezugsebene (S) liegt, die im Wesentlichen parallel zum Luftstrom (44) verläuft, wobei der Hohlraum (50) einen Referenzdurchgangsquerschnitt (Sr) und eine Tiefe (P) aufweist, wobei die rohrförmige Seitenwand (52) zylindrisch ist, eine zu einer Referenzrichtung (DD) parallele Rotationsachse (A52) aufweist und einen Umfang besitzt, wobei die Tiefe (P) einem Abstand entspricht, der einen ersten Schnittpunkt zwischen der Rotationsachse (A52) und der Referenzfläche (S) sowie einen zweiten Schnittpunkt zwischen der Rotationsachse (A52) und dem Boden (54) trennt, wobei der Hohlraum (50) wenigstens eine vom Boden (54) beabstandete Durchgangsquerschnittsverengung (56) aufweist, die sich nur über einen Teil des Umfangs der rohrförmigen Seitenwand (52) erstreckt, und wobei die rohrförmige Seitenwand (54) einen Referenzdurchmesser (Dr) aufweist und die Durchgangsquerschnittsverengung (56) einen Durchmesser (D56) in der Größenordnung von 80 % des Referenzdurchmessers (Dr) hat, mit einer Toleranzspanne in der Größenordnung von +/- 10 %, vorzugsweise von +/- 5 %

2. Luftfahrzeug nach dem vorstehenden Anspruch, bei dem sich die Durchgangsquerschnittsverengung (56) über die Hälfte des Umfangs der rohrförmigen Seitenwand (52) erstreckt, mit einer Toleranzspanne von +/- 20 %, vorzugsweise von +/- 5 %.

3. Luftfahrzeug nach dem vorstehenden Anspruch, bei dem die Durchgangquerschnittsverengung (56) in einem stromaufwärtigen Halbraum angeordnet ist, der durch eine Mittelebene begrenzt ist, die durch die Rotationsachse (A52) verläuft und im rechten Winkel zu der Strömungsrichtung des Luftstroms (44) steht, wobei sich der Begriff stromaufwärts auf die Strömungsrichtung des Luftstroms (44) bezieht, der von stromaufwärts nach stromabwärts strömt.

4. Luftfahrzeug nach einem der vorstehenden Ansprüche, bei dem die Durchgangsquerschnittsverengung (56) in einer Querebene im rechten Winkel zu der Referenzrichtung (DD) angeordnet ist.

5. Luftfahrzeug nach dem vorstehenden Anspruch, bei dem die Querebene in einem Abstand vom Boden (54) in der Größenordnung von 30 % der Tiefe (P) des Hohlraums (50) angeordnet ist, mit einer Toleranzspanne von +/- 20 %, vorzugsweise von +/- 5 %.

6. Luftfahrzeug nach einem der vorstehenden Ansprüche, bei dem die Durchgangsquerschnittsverengung (56) einen Durchgangsquerschnitt in der Größenordnung von 80 % des Referenzdurchgangsquerschnitts (Sr) aufweist, mit einer Toleranzspanne in der Größenordnung von +/- 10 %, vorzugsweise von +/- 5 %.

7. Luftfahrzeug nach einem der vorstehenden Ansprüche, bei dem die Durchgangsquerschnittsverengung (56) eine gegenüber der rohrförmigen Seitenwand (52) vorstehende Rippe (58) aufweist, die eine erste Schmalseite (58.1) umfasst, die sich von der rohrförmigen Seitenwand (52) aus erstreckt und die zum ersten Ende (52.1) der rohrförmigen Seitenwand (52) hin ausgerichtet ist, sowie eine zweite Schmalseite (58.1), die sich von der rohrförmigen Seitenwand (52) aus erstreckt und zum Boden (54) hin ausgerichtet ist.

8. Luftfahrzeug nach dem vorstehenden Anspruch, bei dem die erste Schmalseite (58.1) mit der rohrförmigen Seitenwand (52) einen Winkel zwischen 20 und 60°, vorzugsweise zwischen 30 und 40°, aufweist.

9. Luftfahrzeug nach einem der Ansprüche 7 bis 8, bei dem die zweite Schmalseite (58.2) im Wesentlichen im rechten Winkel zu der rohrförmigen Seitenwand (52) steht.

10. Luftfahrzeug nach einem der Ansprüche 7 bis 9, bei dem die Rippe (58) ein an der rohrförmigen Seitenwand (52) angebrachter Hohlprofilstreifen ist.

## Claims

1. Aircraft comprising at least one aerodynamic wall (40) against which an airflow (44) flows in a direction of flow when the aircraft is in flight and an air intake device (42) which comprises:
- an intake duct (46), which extends between a first end (46.1) connected to the aerodynamic wall (40) and a second end (46.2),
- a valve (48) connected to the second end (46.2) of the intake duct (46) and configured to occupy a permissive state in which the valve (48) allows an airflow channeled by the intake duct (46) to pass through it and a closed state in which the valve (48) blocks the airflow in the intake duct (46), the intake duct (46) and the valve (48) in the closed state delimiting a cavity (50) that opens at the aerodynamic wall (40),
said cavity (50) being delimited by a tubular lateral wall (52) that extends between first and second ends (52.1, 52.2) and by a bottom (54) spaced apart from the aerodynamic wall (40) and situated at the second end (52.2) of the tubular lateral wall (52), the first end (52.1) of the tubular lateral wall (52) being situated at the aerodynamic wall (40) on a reference surface (S) substantially parallel to the airflow (44), the cavity (50) having a reference passage section (Sr) and a depth (P), the tubular lateral wall (52) being cylindrical, having an axis of revolution (A52) and parallel to a reference direction (DD) and having a circumference, the depth (P) corresponding to the distance between a first point of intersection of the axis of revolution (A52) with the reference surface (S) and a second point of intersection of the axis of revolution (A52) with the bottom (54); the cavity (50) comprising at least one reduction in passage section (56), spaced apart from the bottom (54), which extends only over a part of the circumference of the tubular lateral wall (52), the tubular lateral wall (54) having a reference diameter (Dr) , the reduction in passage section (56) having a diameter (D56) of the order of 80% of the reference diameter (Dr) with a tolerance interval of the order of +/- 10%, preferably of +/- 5%.

2. Aircraft as claimed in the preceding claim, wherein the reduction in passage section (56) extends over half the circumference of the tubular lateral wall (52) with a tolerance interval of +/- 20%, preferably of +/- 5%.

3. Aircraft as claimed in the preceding claim, wherein the reduction in passage section (56) is positioned in an upstream half-space delimited by a median plane passing through the axis of revolution (A52), perpendicular to the direction of flow of the airflow (44), the term upstream referring to the direction of flow of the airflow (44), which flows from upstream to downstream.

4. Aircraft as claimed in one of the preceding claims, wherein the reduction in passage section (56) is positioned in a transverse plane perpendicular to the reference direction (DD).

5. Aircraft as claimed in the preceding claim, wherein the transverse plane is situated at a distance from the bottom (54) of the order of 30% of the depth (P) of the cavity (50) with a tolerance interval of +/- 20%, preferably of +/- 5%.

6. Aircraft as claimed in one of the preceding claims, wherein the reduction in passage section (56) has a passage section of the order of 80% of the reference passage section (Sr) with a tolerance interval of the order of +/- 10%, preferably of +/- 5%.

7. Aircraft as claimed in one of the preceding claims, wherein the reduction in passage section (56) comprises a rib (58), projecting with respect to the tubular lateral wall (52), having a first edge face (58.1) that extends from the tubular lateral wall (52), oriented toward the first end (52.1) of the tubular lateral wall (52), and a second edge face (58.1) that extends from the tubular lateral wall (52), oriented toward the bottom (54).

8. Aircraft as claimed in the preceding claim, wherein the first edge face (58.1) forms an angle with the tubular lateral wall (52) of between 20 and 60°, preferably of between 30 and 40°.

9. Aircraft as claimed in either of claims 7 and 8, wherein the second edge face (58.2) is substantially perpendicular to the tubular lateral wall (52).

10. Aircraft as claimed in one of claims 7 to 9, wherein the rib (58) is a hollow roll attached against the tubular lateral wall (52).
